(19) Europäisches Patentamt / European Patent Office / Office européen des brevets

(11) **EP 4 632 697 A1**

(12) **DEMANDE DE BREVET EUROPEEN**

(43) Date de publication:
**15.10.2025 Bulletin 2025/42**

(21) Numéro de dépôt: **25169572.2**

(22) Date de dépôt: **09.04.2025**

(51) Classification Internationale des Brevets (IPC):
*G06V 20/69* *(2022.01)*

(52) Classification Coopérative des Brevets (CPC):
**G06V 20/698**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **10.04.2024 FR 2403717**

(71) Demandeur: **Commissariat à l'Energie Atomique et aux Energies Alternatives**
**75015 Paris (FR)**

(72) Inventeurs:
• **MARTIN, Alice**
  **38054 GRENOBLE CEDEX 09 (FR)**
• **PAVIOLO, Chiara**
  **38054 GRENOBLE CEDEX 09 (FR)**
• **LEMARCHAND, Florian**
  **38054 GRENOBLE CEDEX 09 (FR)**

(74) Mandataire: **INNOV-GROUP**
**209 Avenue Berthelot**
**69007 Lyon (FR)**

(54) **PROCÉDÉ ET DISPOSITIF DE CLASSIFICATION DE PARTICULES BIOLOGIQUES DANS UN ÉCHANTILLON**

(57)    Procédé de classification de particules biologiques, se déplaçant dans un échantillon, le procédé comportant :

a) acquisition d'images de l'échantillon respectivement en différents instants de mesure;

b) à partir des images acquises, suivi des positions respectives de différentes particules aux instants de mesure ;

puis, en chaque instant de mesure, et pour chaque particule, :

c) à partir de chaque image acquise, détermination de N caractéristiques de la particule, de façon à obtenir, à chaque instant de mesure, un vecteur de caractéristiques, de dimension N, N étant un entier supérieur à 2 ;

d) application d'un premier algorithme de classification, de façon assigner une classe temporelle à la particule, à l'instant de mesure ;

le procédé étant caractérisé en ce qu'il comporte également

e) à partir de chaque classe temporelle assignée à une même particule, aux différents instants de mesure, application d'un algorithme de classification de façon à assigner une classe typologique à ladite particule, la classe typologique d'état étant représentative de l'évolution de la particule durant les différents instants de mesure.

Fig. 7B

EP 4 632 697 A1

## Description

## DOMAINE TECHNIQUE

Le domaine technique de l'invention est la caractérisation de particules biologiques, en particulier des cellules, dans un milieu de culture.

## ART ANTERIEUR

L'imagerie de cellules vivantes « in-vitro » est une technique utilisée en biologie cellulaire et en biologie moléculaire pour observer et enregistrer en temps réel les processus biologiques se déroulant à l'intérieur des cellules. Contrairement à l'imagerie sur cellules fixes, qui capture des images statiques, l'imagerie de cellules vivantes permet d'observer les réponses cellulaires dans leur contexte naturel et dynamique. L'avantage principal de l'imagerie de cellules vivantes est qu'elle permet de capturer les aspects spatio-temporels des réponses cellulaires qui ne sont pas accessibles par l'imagerie sur cellules fixes. On peut ainsi suivre l'évolution du développement de cellules au fil du temps. Cela permet de comprendre les mécanismes cellulaires complexes, tels que la division cellulaire ou la migration cellulaire. Cela permet également de caractériser des changements individuels affectant le développement cellulaire, qu'il s'agisse de cellules souches, de cellules d'une même lignée, ou de cellules en réponse à des perburbations pharmacologiques.

La publication Gordonov "time series modeling of live-cell shape dyanmics for image-based phenotypic profiling" décrit l'application d'imagerie de cellules vivantes de type MDA MB-231 marquées par des marqueurs fluorescents. MDA MB-231 est une lignée cellulaire de cancer du sein humain. Différentes cellules de la même lignée sont disposées dans différents milieux, comportant respectivement différents actifs thérapeutiques. Les images de cellules sont effectuées par microscopie d'épifluorescence 2D, avec un grossissement x10. Différentes images sont acquises, permettant l'identification et le suivi de cellules en différents instants. A chaque instant, et pour chaque cellule, un grand nombre de caractéristiques morphologiques sont extraites. Les caractéristiques morphologiques extraites, à chaque instant, et pour chaque cellule, font l'objet d'une réduction de dimensions par décomposition en composantes principales (PCA). Ainsi, pour chaque cellule, on peut visualiser une trajectoire dans un espace latent bidimensionnel, résultant de la PCA. L'espace latent est discrétisé en classes, chaque classe correspondant à un état morphologique d'une cellule. La publication montre que la trajectoire cellulaire d'une cellule peut passer, au cours du temps, par différents états morphologiques, les probabilités de changements d'état pouvant être modélisés selon une approche basée sur les modèles de Markov cachés. Cette approche permet d'établir des signatures temporelles représentant l'évolution de la morphologie de cellules d'une même lignée soumises à différents principes actifs.

Cependant, une telle approche suppose une modélisation individuelle de l'évolution de la morphologie de chaque cellule, ce qui n'est pas envisageable si l'on dispose d'un trop grand nombre de cellules, ou d'une observation trop longue. Dans la publication précitée, on a pris en compte 293 cellules, sur 53 intervalles de temps.

La publication Wang. "Live-cell imaging and analysis reveal cell phenotypic transition reveal cell phenotypic transition dynamics inherently missing in snapshot data" décrit l'application de l'imagerie de cellules vivantes à des cellules de type A549 VIM-RFP, qui sont des cellules A549 de carcinome pulmonaire humain génétiquement modifiées pour exprimer une protéine fluorescente rouge (RFP - Red Fluorescent Protein). Dans cette publication, on extrait des caractéristiques morphologiques de différentes cellules, en fonction du temps, et l'on détermine une trajectoire de chaque cellule dans un espace latent déterminé par PCA, de façon similaire à la publication précédente.

La publication Freckmann Eva et al « Traject3d allows label-free identification of distinct co-occuring phenotypes with 3D culture by live imaging", Nature communications, vol. 13, n°1, 9 sept. 2022 décrit le recours à une série d'images effectuées sur des cellules cultivées. A partir des images, des caractéristiques, notamment morphologiques, sont extraites, et projetées dans un espace latent, pour être classifiées entre différentes classes. Des trajectoires, dans l'espace latent, sont définies, qui correspondent aux classes successivement occupées par chaque cellule.

La publication Copperman Jeremy et al « Morphodynamical cell state description via live-cell imging décrit également le recours à une série d'images effectuées sur des cellules cultivées, avec projection de caractéristiques de cellules dans un espace latent. Les trajectoires, dans l'espace latent, de cellules, sont comparées.

Cependant, il a été constaté qu'une classification de cellules en fonction de leur trajectoire est difficile, en particulier lorsque l'on dispose d'un grand nombre de cellules et lorsque les trajectoires sont longues, suite à une observation de plusieurs heures, voire de plusieurs jours. Tout d'abord, chaque trajectoire peut être affectée d'un bruit lié à l'acquisition des images, ou à l'extraction des caractéristiques morphologiques sur chaque image. Cela rend difficile une classification basée sur la trajectoire. De plus, une classification de trajectoires est basée sur une calcul de distances entre trajectoires. Or, les trajectoires sont établies à partir d'un grand nombre d'images, typiquement plus de 100, ce qui rend le calcul de distances coûteux en terme de temps de calcul, notamment dès lors qu'on a affaire à des trajectoires de longueur différente. Une autre difficulté liée à la classification de trajectoires provient du fait que les longueurs des trajectoires peuvent être différentes les unes des autres, car elles sont liées à la durée de vie d'une cellule dans le milieu analysé.

L'inventrice propose un procédé amélioré d'imagerie de cellules vivantes, permettant une caractérisation de l'évolution d'un grand nombre de cellules, typiquement plusieurs milliers, durant des longues périodes, typiquement plusieurs jours.

## EXPOSE DE L'INVENTION

Un premier objet de l'invention est un procédé de classification de particules biologiques, se déplaçant dans un échantillon, le procédé comportant :

- a) acquisition d'images de l'échantillon respectivement en différents instants de mesure ;
- b) à partir des images acquises, suivi des positions respectives de différentes particules aux instants de mesure ;

puis, en chaque instant de mesure, et pour chaque particule, :

- c) à partir de chaque image acquise, détermination de caractéristiques de la particule, de façon à obtenir, à chaque instant de mesure, un vecteur de caractéristiques, de dimension N, N étant un entier supérieur ou égal à 2 ;
- d) application d'un premier algorithme de classification, de façon assigner une classe temporelle à la particule, à l'instant de mesure ;

le procédé étant caractérisé en ce qu'il comporte également

- e) à partir de chaque classe temporelle assignée à une même particule, en différents instants de mesure, application d'un deuxième algorithme de classification de façon à assigner une classe typologique à ladite particule, la classe typologique étant représentative de l'évolution de la particule durant les différents instants de mesure.

L'étape d) peut comporter :

- d-1) projection du vecteur de caractéristiques dans un premier espace latent, dont la dimension est inférieure à N, de façon à former un premier vecteur latent, représentatif des caractéristiques de la particule à l'instant de mesure ;
- d-2) application du premier algorithme de classification au premier vecteur latent de façon assigner la classe temporelle à la particule, à l'instant de mesure .

L'étape e) peut comporter, pour chaque particule :

- e-1) constitution d'un vecteur de trajectoire à partir des classes temporelles assignées à ladite particule à chaque instant de mesure ;
- e-2) projection du vecteur de trajectoire dans un deuxième espace latent, de façon à former un deuxième vecteur latent, représentatif de la particule;
- e-3) application du deuxième algorithme de classification au deuxième vecteur latent de façon à assigner la classe typologique à la particule.

Le vecteur de trajectoire comporte une quantité ou une liste de chaque classe temporelle à laquelle la particule est assignée à chaque instant de mesure.
L'étape e-1) peut comporter :

- constitution d'un réseau de neurones de prédiction, configuré pour prédire chaque classe temporelle assignée à une particule à partir des caractéristiques déterminées à chaque instant de mesure, le réseau de neurones de prédiction comportant :

  • une couche d'entrée, formée par les caractéristiques déterminées pour une particule ;
  • une couche de sortie, formée par les classes temporelles successivement assignées à la particule à chaque instant de mesure ;
  • au moins une couche intermédiaire, entre la couche d'entrée et la couche de sortie ;

- apprentissage du réseau de neurones à partir des caractéristiques déterminées pour différentes particules, ainsi qu'avec les classes temporelles successivement assignées à chacune desdites particules ;
- formation du vecteur de trajectoire à partir d'une couche intermédiaire du réseau de neurones.

Lors de l'étape c), chaque caractéristique peut être choisie parmi :

- au moins une caractéristique morphologique ;
- et/ou au moins une caractéristique dynamique, correspondant à une variation d'une caractéristique morphologique en fonction du temps ou d'une vitesse de déplacement ;
- et/ou au moins une caractéristique de voisinage, représentant une densité de particules dans le voisinage de la particule ;
- et/ou tout ou partie d'un masque de segmentation, le masque de segmentation correspondant à une région d'intérêt extraite de l'image, comportant la particule.

Chaque étape c) peut comporter une détermination d'au moins deux caractéristiques de la particule.
Selon une possibilité, chaque sous étape d1) comporte :

- d-1i) partition du vecteur de caractéristiques en K vecteurs élémentaires, K étant un entier inférieur à N ;

- d-1ii) projection de chaque vecteur élémentaire dans un espace latent élémentaire, de façon à former, dans chaque espace latent élémentaire, un vecteur latent élémentaire;
- d-1iii) projection de chaque vecteur latent élémentaire résultant de d-1ii) dans le premier espace latent.

Lors de l'étape a), l'échantillon peut être disposé face à un capteur d'image, aucune optique de formation d'image n'étant disposé entre l'échantillon et le capteur d'image.

Lors de l'étape a), l'échantillon peut être disposé face à un capteur d'image, un système optique, de type lentille ou objectif, étant disposé entre l'échantillon et le capteur d'image, le système optique définissant un plan objet et un plan image. Selon une possibilité, le plan objet est décalé par rapport à l'échantillon et/ou le plan image est décalé par rapport au capteur d'image. Selon une autre possibilité, le système optique étant focalisé sur l'échantillon.

La particule biologique peut être une cellule ou un microorganisme.

Selon une possibilité, le procédé comporte, lors de l'étape e)

- Parmi les particules :

  • identification de particules détectées sur l'image acquise au premier ou au dernier instant de mesure, pour lesquelles la trajectoire, définie par les classes temporelles successivement assignées au cours des différents instants de mesure, est incomplète ;
  • identification de particules détectées après l'image acquise au premier instant et non détectées au dernier instant de mesure, pour lesquelles la trajectoire, définie par les classes temporelles successivement assignées au cours des différents instants de mesure, est complète ;

- pour chaque particule dont la trajectoire est incomplète, identification d'au moins une particule modèle, de trajectoire complète, dont le début ou la fin de la trajectoire correspond à la trajectoire incomplète de ladite particule ;
- classification typologique de chaque particule de trajectoire incomplète en fonction de la classification typologique d'au moins une particule modèle identifiée.

Le premier espace latent et/ou le deuxième espace latent sont définis au cours d'une phase d'apprentissage. Il en est de même des classes définies par le premier algorithme de classification et le deuxième algorithme de classification. Ces dernières sont définies, de préférence de manière non supervisées, au cours de la phase d'apprentissage.

Un deuxième objet de l'invention est un dispositif d'observation d'un échantillon, comportant :

- un capteur d'image, configuré pour être disposé face à l'échantillon ;
- une unité de traitement, configurée pour recueillir des images formées par le capteur d'image en différents instants, et programmée pour mettre en œuvre les étapes c) à e) d'un procédé selon le premier objet de l'invention.

Le dispositif peut comporter les caractéristiques décrites en lien avec le premier objet de l'invention.

Un troisième objet de l'invention est un programme d'ordinateur, programmé pour mettre en œuvre les étapes c) à e) d'un procédé selon le premier objet de l'invention.

L'invention sera mieux comprise à la lecture de l'exposé des exemples de réalisation présentés, dans la suite de la description, en lien avec les figures listées ci-dessous.

## FIGURES

La figure 1A schématise un exemple de dispositif selon l'invention.

La figure 1B schématise un autre exemple de dispositif selon l'invention.

La figure 2 illustre les principales étapes d'un procédé de classification de particules biologiques selon l'invention.

La figure 3A montre une image acquise par un capteur d'image, placé en configuration sans lentille.

La figure 3B montre une image obtenue en mettant en œuvre un algorithme de reconstruction holographique à l'image représentée sur la figure 3A.

Les figures 4 et 5 illustrent une segmentation de l'image reconstruite, de façon à extraire des masques de segmentation, chaque masque de segmentation étant représentatif d'une cellule, et de préférence d'une seule cellule.

Les figures 6A à 6F montrent des distributions temporelles de différentes caractéristiques.

La figure 7A montre une formation d'un premier vecteur latent à partir d'un vecteur de caractéristiques.

La figure 7B montre une trajectoire d'une cellule dans un premier espace latent.

La figure 7C montre une projection d'un vecteur de trajectoire dans un deuxième espace latent, différent du premier espace latent.

La figure 7D montre une obtention de deuxièmes vecteurs latents de différentes cellules dans le deuxième espace latent.

La figure 8A montre une distribution d'un score de silhouette de différentes classes temporelles de cellules.

La figure 8B représente les classes de cellules évoquées en lien avec la figure 8A.

La figure 9A montre une répartition de cellules dans différentes classes temporelles.

La figure 9B montre, pour chaque cellule, une proportion de classification dans différentes classes temporelles.

Les figures 10A à 10E représentent ses distributions de caractéristiques de cellules, classifiées dans différentes classes typologiques dans un deuxième espace latent.

La figure 11A représente des variations de caractéristiques de cellules classifiées dans différentes classes typologiques, dans un deuxième espace latent différent du premier espace latent.

Les figures 11B et 11C représentent des variations de caractéristiques de cellules classifiées dans différentes classes typologiques, dans le premier espace latent.

La figure 12 schématise un réseau de neurones, dont une couche intermédiaire peut être extraite pour former le vecteur de trajectoire d'une cellule.

Les figures 13A à 13C illustrent des variantes de réalisation.

## EXPOSE DE MODES DE REALISATION PARTICULIERS

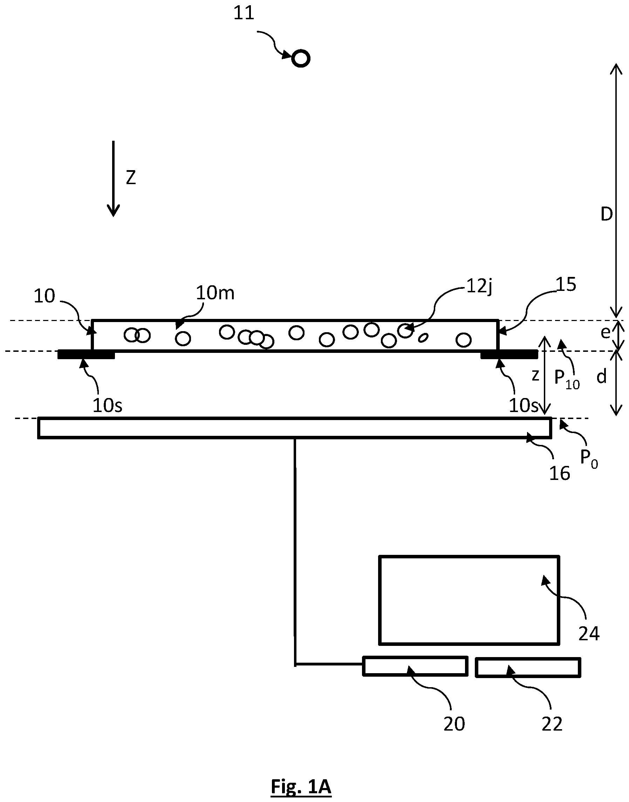

La figure 1A représente un exemple de dispositif selon l'invention. Une source de lumière 11 est configurée pour émettre une onde lumineuse se propageant vers un échantillon 10, selon un axe de propagation Z. L'onde lumineuse est émise selon une bande spectrale $\Delta\lambda$.

L'échantillon 10 est un échantillon comportant des particules biologiques 12, en particulier des cellules ou des microorganismes, que l'on souhaite caractériser. Il peut également s'agir de spores, de bactéries, ou encore des micro-algues.

Dans l'exemple décrit, les particules 12 sont des cellules d'une même lignée cellulaire (cellules de type « fibroblastes » issues de souris génétiquement modifiées dont le gène « KER » régulant le cycle circadien a été inhibé, baignant dans un milieu de culture 10m. Bien que les cellules soient d'une même lignée cellulaire, elles peuvent évoluer ou se développer différemment les unes des autres, dans le milieu de culture, en fonction du temps. On peut ainsi déterminer des sous-phénotypes, correspondant à des typologies de cellules différents, ayant différentes évolutions dans le temps.

L'échantillon 10 est, dans cet exemple, contenu dans une chambre fluidique 15 d'épaisseur e. L'épaisseur e de l'échantillon 10, selon l'axe de propagation Z varie typiquement entre 10 $\mu$m et 1 cm, et est de préférence comprise entre 20 $\mu$m et 500 $\mu$m. L'échantillon 10 s'étend selon un plan, dit plan de l'échantillon, de préférence perpendiculaire à l'axe de propagation Z. Il est maintenu sur un support 10s à une distance d d'un capteur d'image 16.

La distance D entre la source de lumière 11 et l'échantillon 10 est de préférence supérieure à 1 cm. Elle est de préférence comprise entre 2 et 30 cm. Avantageusement, la source de lumière, vue par l'échantillon, est considérée comme ponctuelle. La source de lumière 11 peut être une diode électroluminescente comme représenté sur la figure 1A. Elle peut être associée à un diaphragme ou filtre spatial ou une fibre optique. La source de lumière 11 peut être une source laser, telle une diode laser.

De préférence, la bande spectrale d'émission $\Delta\lambda$ de l'onde lumineuse émise par la source a une largeur inférieure à 100 nm. Par largeur de bande spectrale, on entend une largeur à mi-hauteur de ladite bande spectrale.

L'échantillon 10 est disposé entre la source de lumière 11 et le capteur d'image 16 précédemment évoqué. Ce dernier s'étend de préférence parallèlement, ou sensiblement parallèlement à l'échantillon. Le terme sensiblement parallèlement signifie que les deux éléments peuvent ne pas être rigoureusement parallèles, une tolérance angulaire de quelques degrés, inférieure à 20° ou 10° étant admise. Le capteur d'image 16 est apte à former une image $I$ selon un plan de détection $P_0$. Dans l'exemple représenté, il s'agit d'un capteur d'image comportant une matrice de pixels, de type CCD ou un CMOS. Le plan de détection $P_0$ s'étend de préférence perpendiculairement à l'axe de propagation Z de l'onde lumineuse incidente.

La configuration représentée sur la figure 1A est une configuration en imagerie sans lentille, selon laquelle il n'y a pas d'optique de formation d'image entre l'échantillon et le capteur d'image. Cela n'empêche pas la présence éventuelle de microlentilles de focalisation au niveau de chaque pixel du capteur d'image 16, ces dernières n'ayant pas de fonction de grandissement de l'image acquise par le capteur d'image. La distance $d$ entre l'échantillon 10 et la matrice de pixels du capteur d'image 16 est avantageusement comprise entre 50 $\mu$m et 2 cm, de préférence comprise entre 100 $\mu$m et 2 mm.

Le dispositif représenté sur la figure 1A peut être de type Cytonote (fournisseur Iprasense), décrit dans Allier C. et al, « CNN-based cell analysis : from image to quantitative representation », Frontiers in Physics, 25/01/2022.

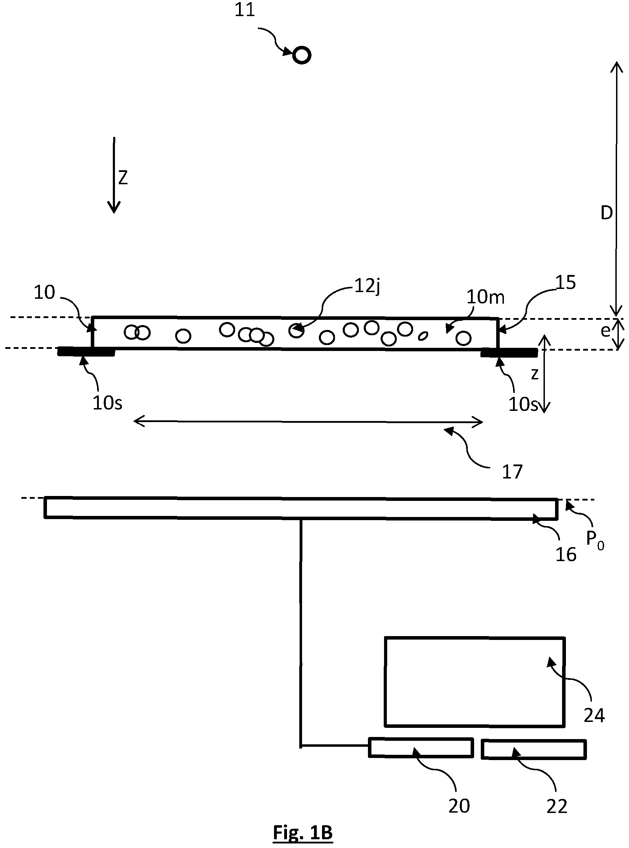

Sur la figure 1B, on a représenté une autre configuration, selon laquelle le dispositif comporte un système optique 17, de type lentille 17, ou association de lentilles. Le système optique peut être configuré pour former une image focalisée de l'échantillon sur le plan de détection du capteur d'image. De façon alternative, le système optique peut être configuré pour former une image défocalisée de l'échantillon. Le système optique comporte un plan objet et un plan image. On obtient une image défocalisée lorsque le plan objet et/ou le plan image sont légèrement décalés respectivement par rapport à l'échantillon ou au plan de détection. Par légèrement décalé, on entend selon une distance de décalage de quelques dizaines de μm.

Le recours à l'imagerie sans lentille (figure 1A) ou à l'imagerie défocalisée (figure 1B) est particulièrement adapté à des images d'objets transparents ou présentant un faible contraste avec le milieu ambiant. Cela permet d'observer des cellules en évitant un marquage par un marqueur exogène coloré ou fluorescent. On observe ainsi l'évolution des cellules, sans l'influence d'un marqueur. Le recours à l'imagerie sans lentille permet de former des images selon un champ d'observation élevé, ce qui permet une observation simultanée d'une population importante de cellules.

Lorsque les particules ne sont pas considérées comme transparentes, l'image peut être effectuée en mettant en œuvre un capteur d'image couplé à un système optique focalisé. De préférence, le système optique permet d'observer l'échantillon selon une profondeur de champ élevée. Ce type de configuration peut convenir à l'observation de particules telles que des spermatozoïdes ou de microalgues.

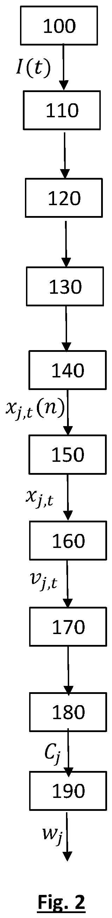

Le dispositif comporte une unité de traitement 20, programmée pour mettre en œuvre des opérations de traitement ou de calcul décrites par la suite, en lien avec la figure 2. Les instructions suivies par l'unité de traitement sont stockées dans une mémoire 22, connectée à l'unité de traitement par liaison filaire ou sans fil. L'unité de traitement 20 peut par exemple comporter un microprocesseur. L'unité de traitement peut être reliée à un écran 24.

La figure 2 décrit les principales étapes de l'invention.

Etape 100 : acquisition d'images de l'échantillon en différents instants.

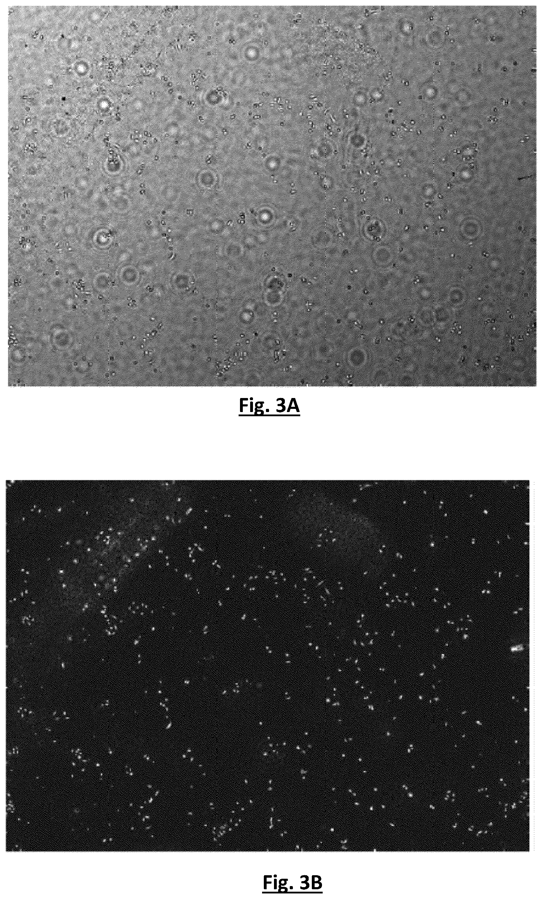

Les images de l'échantillon $I(t)$ sont acquises selon une configuration d'imagerie sans lentille, en différents instants de mesure $t$, avec $1 \leq t \leq T$. $t$ est un entier désignant chaque instant de mesure. Dans l'image acquise, chaque cellule apparaît sous la forme d'une figure de diffraction, comme représenté sur la figure 3A. Une telle image n'est généralement pas directement exploitable, sans le recours à un algorithme de reconstruction holographique tel que décrit dans l'étape 110. Le pas d'échantillonnage temporel peut être de quelques minutes ou quelques dizaines de minutes, par exemple 10 ou 20 minutes.

Etape 110 : application d'un algorithme de reconstruction.

En utilisant un algorithme de reconstruction holographique, on peut former une image plus exploitable de l'échantillon, permettant l'observation de ce dernier. Il peut s'agit par exemple d'une image dite de phase de l'échantillon. Sur l'image de phase, chaque particule apparaît sous la forme d'une tache, traduisant une variation du trajet optique de l'onde lumineuse, induite par la particule. L'image est appelée image de phase, car la variation de trajet optique est reliée au déphasage de l'onde lumineuse par la particule. Une telle image de phase peut être obtenue en mettant en œuvre des algorithmes de reconstruction connus. Des exemples d'algorithmes de reconstruction sont décrits dans US10816454 ou dans la publication Hervé et al « Alternation of inverse problem approach and deep learning for lens-free microscopy image reconstruction », Scientific Reports, 10(1), 20207. La figure 3B montre une image de phase de chaque cellule. On comprend que l'image de phase présente une qualité suffisante pour détecter et de délimiter chaque cellule. L'application de l'algorithme de reconstruction n'est pas nécessaire lorsque l'image est acquise avec un capteur d'image couplé à un système optique focalisé sur l'échantillon.

Etape 120 : Prétraitement - segmentation

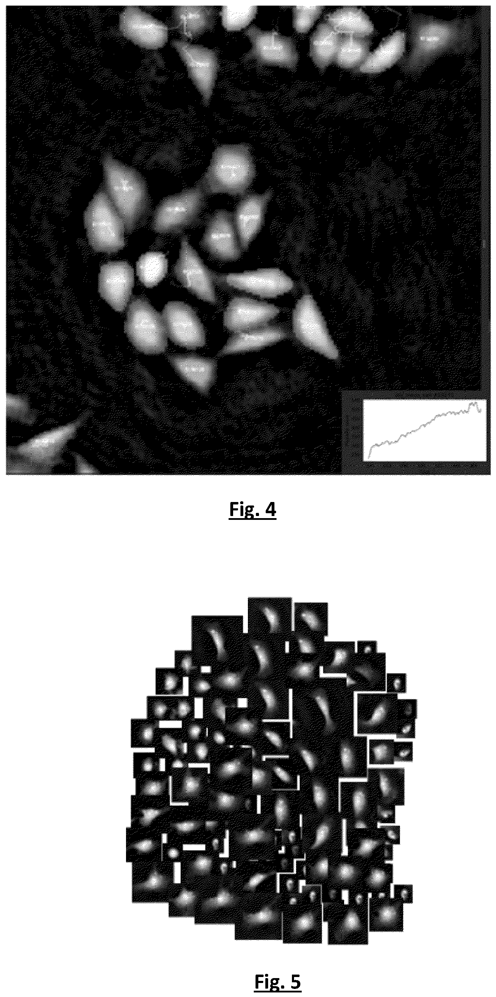

Au cours de cette étape, l'image reconstruite fait l'objet d'une segmentation, de façon à isoler chaque cellule. La segmentation peut être précédée d'étapes de prétraitement, par exemple de type seuillage, de façon à faciliter la segmentation. La segmentation consiste à extraire un masque de segmentation de chaque image reconstruite correspondant à chaque cellule. De préférence, un masque de segmentation correspond à une unique cellule. La segmentation est par exemple effectuée avec l'algorithme Cellpose, décrit dans Wang et al « Cellpose : a generalist algorithm for cellular segmentation » Nature methods, 18(1), 100-106. L'algorithme de segmentation a de préférence fait l'objet d'un entraînement, ou d'un ré-entrainement partiel sur la culture de cellules d'intérêt, dans cet exemple des cellules de type PER (PERIOD)-TKO (Triple Knock Out). Le ré-entrainement peut également être effectué avec quelques cellules de l'échantillon, par exemple quelques dizaines. La figure 4 montre une partie de l'image d'observation de l'échantillon (image de phase), après segmentation. Chaque partie claire correspond à un masque de segmentation pouvant être aisément extrait de l'image.

La figure 5 montre différentes vignettes, chaque vignette représentant une partie de l'image extraite, correspondant à une cellule.

Etape 130 : Tracking

Après segmentation, on met en œuvre un algorithme de tracking, de façon à suivre chaque cellule, à chaque instant de mesure t. L'algorithme de tracking est par exemple Trackpy, décrit dans https://soft-matter.github.io/trackpy/v0.6.2/. L'algorithme de tracking suit une cellule dans l'échantillon, jusqu'à sa division. La division correspond à une variation importante et rapide de caractéristiques morphologiques, en général une baisse importante de la masse sèche couplée à une augmentation importante de l'épaisseur.

Etape 140 : extraction de caractéristiques morphologiques

A chaque instant de mesure, la segmentation permet d'extraire des caractéristiques morphologiques en deux dimensions de la cellule. Il s'agit par exemple :

- de l'aire du masque de segmentation ;
- du périmètre du masque;
- ou de l'excentricité du masque. L'excentricité du masque correspond à l'excentricité d'une ellipse ajustée sur le masque de segmentation ;
- masse sèche : il s'agit d'une différence entre la masse de la cellule et la masse du milieu ambiant occupant le même volume de la cellule. La masse sèche peut être estimée comme décrit dans la publication « Allier » précédemment citée, en particulier dans le paragraphe 2.1 de cette publication. Plus précisément, la masse sèche peut être estimée comme suit :

Si r désigne une coordonnée bidimensionnelle d'un point de la cellule, cette dernière induit une variation de phase $\delta\varphi(r) = \varphi(r) - \varphi_0$, où $\varphi_0$ est le déphasage de l'onde lumineuse incidente due au milieu de culture 10, et $\varphi(r)$ est le déphasage de l'onde lumineuse incidente due à la cellule. La grandeur $\delta\varphi(r)$, correspond au déphasage de l'onde lumineuse incidente due à la cellule, relativement au milieu.

La variation de trajet optique induite en chaque point de la cellule, mesurée directement à partir de l'image de phase, et notée $OPD(r)$ est telle que

$$OPD(r) = \lambda \frac{OPD(r)}{2\pi} \ (1)$$

Où $\lambda$ est la longueur d'onde de l'onde lumineuse incidente.

En intégrant l'expression (1) sur la surface S du masque de segmentation, on peut estimer une différence de volume optique $OVD$ induit, par la cellule, avec

$$OVD = \int_S OPD(r)dr \ (2)$$

La masse sèche $CDM$ est estimée selon

$$CDM = \frac{OVD}{\alpha} \ (3),$$

$\alpha$ dépend de la cellule. Dans les cellules de mammifères, $\alpha = 0.18 \ \mu m^3 pg^{-1}$.

Une autre caractéristique morphologique est l'épaisseur de chaque cellule, considérée comme homogène, établie selon $\frac{OPD}{\delta}$, où $OPD(r)$ est obtenu, sur l'image de phase, à une coordonnée r correspondant à la cellule. $\delta$ est représentatif d'une variation de l'indice de réfraction entre la cellule et le milieu de culture. $\delta$ est par exemple égal à 0.02.

Avantageusement, des caractéristiques autres que morphologiques sont extraites, de façon à enrichir l'information relative à chaque cellule. Il peut s'agir de caractéristiques liées au voisinage de chaque cellule, par exemple une densité de cellules autour de la cellule considérée. Il s'agit du nombre de cellules identifiées dans un voisinage prédéterminé de la cellule, par exemple dans une région d'intérêt de 100 $\mu$m x 100 $\mu$m centrée sur la cellule.

Il est également avantageux de prendre en compte des caractéristiques dites dynamiques, liées au déplacement ou à l'évolution de la cellule entre différents instants de mesure. Les caractéristiques dynamiques peuvent comprendre :

- vitesse de la cellule, c'est-à-dire la vitesse entre deux instants de mesure différents, par exemple deux instants de mesure consécutifs : la vitesse entre deux instants de mesure consécutifs est une vitesse instantanée. Il est également possible de prendre en compte une vitesse moyenne, entre des instants de mesure non consécutifs, par exemple des instants de mesure décalés de 3 incréments temporels.
- variation instantanée ou moyenne de la masse sèche instantanée : il s'agit de la variation de la masse sèche, telle que définie dans (3), entre deux instants de mesure consécutifs (variation instantanée) ou entre des instants de mesure non consécutifs (variation moyenne). La variation moyenne peut par exemple être déterminée en considérant des instants de mesure décalés de 3 incréments temporels.

Les caractéristiques peuvent également concerner la vie de la cellule, entre sa naissance, c'est-à-dire son apparition sur une des images acquises et sa division ou sa mort. Il peut s'agir :

- de la durée de vie : nombre d'incréments temporels entre les première et la dernière image de l'échantillon sur lesquelles la cellule apparaît, multiplié par le pas temporel d'acquisition (ici 20 minutes), de manière à avoir une durée en minutes;
- de la vitesse moyenne durant la vie de la cellule : distance parcourue par la cellule entre sa naissance et la division (ou la mort) divisée par la durée de vie ;
- du taux de croissance moyen de la cellule, de sa naissance à sa division.

Un aspect important de l'invention est de ne pas se limiter à des caractéristiques morphologiques, et de prendre en compte les caractéristiques liées au voisinage et/ou les caractéristiques dynamiques et/ou les caractéristiques liées à la durée de vie de la cellule telles que précédemment décrites.

Ainsi, à chaque instant, une cellule peut être décrite par un jeu de N caractéristiques, N étant par exemple égal à treize. Les caractéristiques sont ainsi :

- cinq caractéristiques morphologiques : aire, périmètre, épaisseur, masse sèche, excentricité ;
- une caractéristique de voisinage : densité de cellules dans le voisinage de la cellule ;
- quatre caractéristiques dynamiques : vitesse instantanée, vitesse moyenne (calculée 3 incréments temporels), variation de masse sèche instantanée, variation de masse sèche moyenne (calculée sur 3 incréments temporels) ;
- trois caractéristiques liées à la durée de vie de la cellule : durée de vie, vitesse moyenne calculée selon la durée de vie, variation de masse sèche moyenne calculée selon la durée de vie.

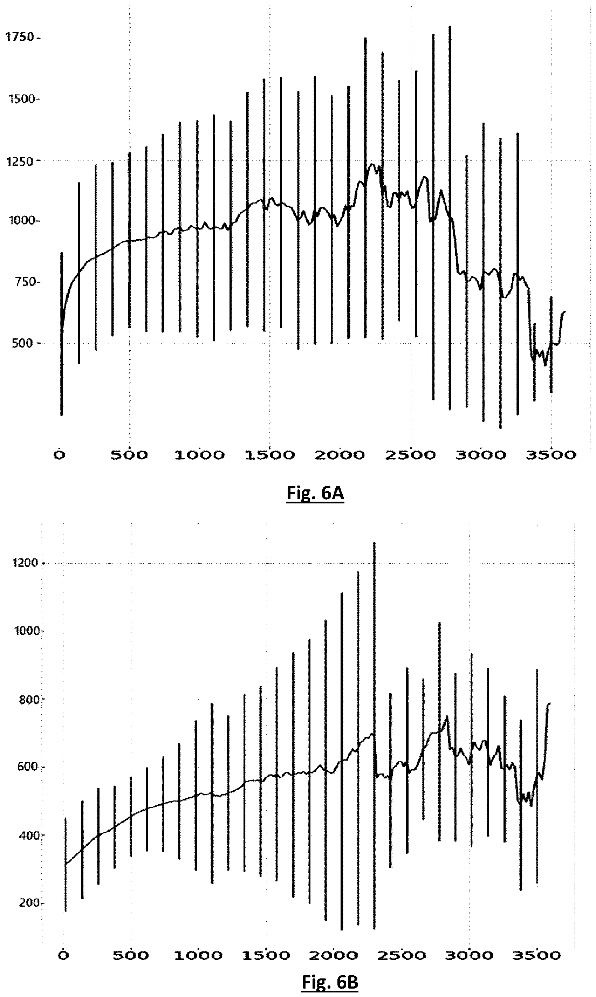

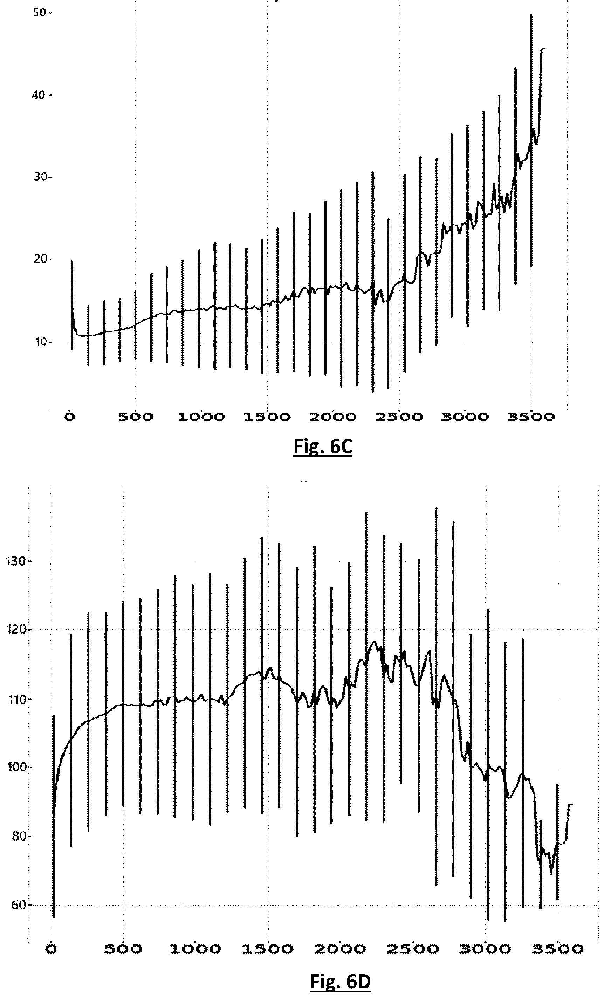

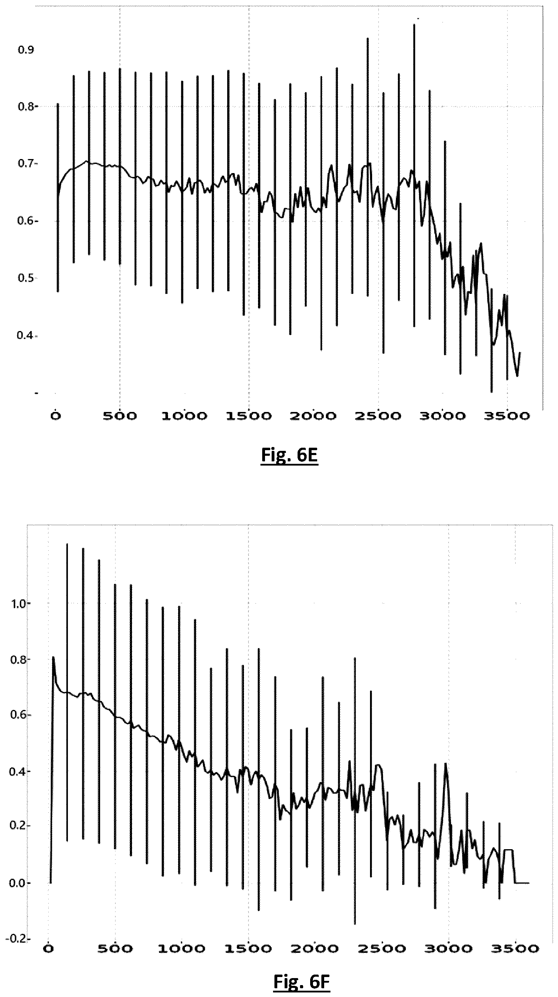

Les figures 6A à 6F montrent une évolution de six caractéristiques moyennées sur l'ensemble des cellules de l'échantillon, sur une durée de 3500 minutes (axe des abscisses). Les axes des ordonnées correspondent respectivement, de gauche à droite et de haut en bas, à des moyennes, pour l'ensemble des cellules, des caractéristiques suivantes : l'aire, la masse sèche, l'épaisseur, le périmètre, l'excentricité et la vitesse instantanée. Les traits verticaux représentent l'intervalle de confiance à $\pm$ $1\sigma$.

Etape 150 : Filtrage

Au cours de cette étape, des cellules considérées comme des anomalies sont supprimées. Il peut par exemple s'agir de cellules sortant ou entrant dans le champ d'observation, ou des cellules dont la durée de vie est trop courte, par exemple inférieures à 4 heures, ou des particules immobiles, qui peuvent ne pas être des cellules, par exemple des poussières.

Etape 155 : Normalisation

Suite à l'étape 140, à chaque cellule est assigné un vecteur de caractéristiques $x_{j,t}$ dont chaque coordonnée $x_{j,t}(n)$ correspond à une caractéristique. $n$ est un entier tel que $1 \leq n \leq N$, correspondant à un rang assigné à chaque caractéristique. L'indice $j$ désigne la cellule.

Les caractéristiques peuvent être normalisées, de façon que :

$$x_{j,t}(n) \leftarrow \frac{x_{j,t}(n) - \overline{x_t(n)}}{\sigma(x_t(n))}$$

Où :

- $x_t(n)$ est la moyenne des $n^{\text{ièmes}}$ caractéristiques pour l'ensemble des cellules j à l'instant t.
- $\sigma(x_t(n))$ est l'écart type des $n^{\text{ièmes}}$ caractéristiques pour l'ensemble des cellules j à l'instant t)

L'étape de normalisation est avantageuse, mais optionnelle, selon laquelle chaque variable est normalisée. Cela permet à chaque variable d'avoir le même poids pour les étapes suivantes.

Etape 160 : Réduction de dimensions - Projection dans un premier espace latent

Suite à l'étape 140, on dispose d'un ensemble de caractéristiques pour chaque cellule, et cela en chaque incrément temporel.

Un objectif du procédé est de procéder à une classification temporelle de chaque cellule, en fonction des caractéristiques. La classification est dite temporelle car elle est effectuée, pour chaque cellule, à chaque instant. A chaque instant, le nombre de caractéristiques est élevé, typiquement supérieur à 5, voire supérieur à 10. Cela est dû à la prise en compte de caractéristiques autres que morphologiques, par exemple des caractéristiques de voisinage de la cellule ou des caractéristiques dynamiques ou liées à la durée de vie de la cellule. Compte tenu du nombre N de caractéristiques, la classification peut avantageusement être effectuée dans un premier espace latent L1, dont la dimension M est inférieure à N. Le premier espace latent L1 est défini au cours d'une phase d'apprentissage, en appliquant un algorithme de réduction de dimensions aux caractéristiques.

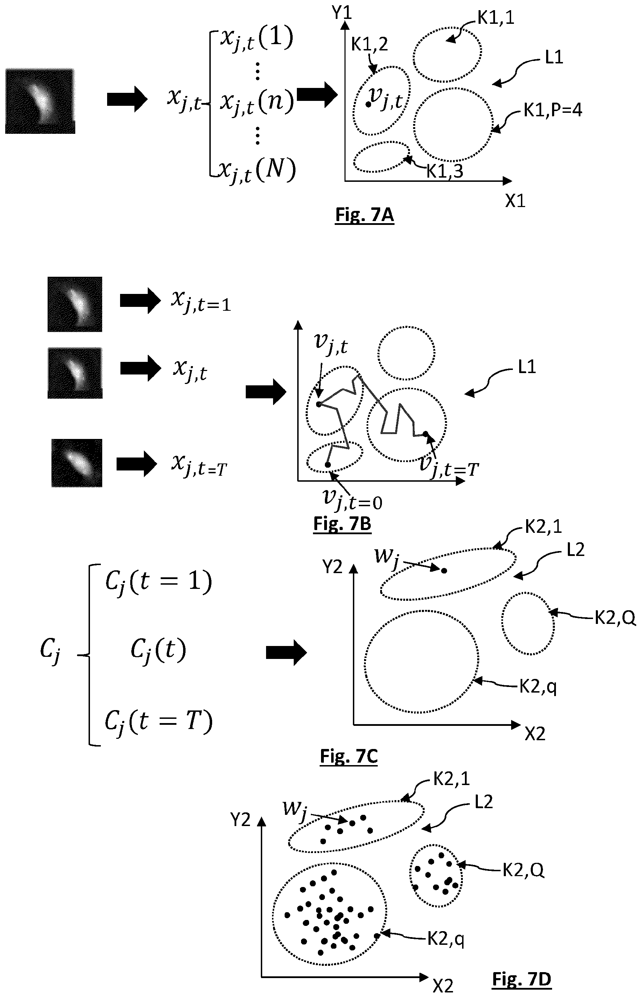

Sur la figure 7A, on a représenté une cellule, à partir de laquelle est extrait un vecteur de caractéristiques $x_{j,t}$ et cela à chaque instant t. Le vecteur de caractéristique est projeté dans le premier espace latent L1. Dans l'exemple représenté, le premier espace latent L1 est de dimension M = 2, en étant défini par les axes X1 et Y1. Des essais ont montré que la dimension du premier espace latent L1 peut être égale à 2 ou 3, tout en permettant une classification satisfaisante des cellules à chaque instant.

Différentes méthodes de réduction de dimensions sont disponibles. D'une façon générale, une méthode de réduction de dimensionnalité permet de représenter des coordonnées d'origine, dans un espace des caractéristiques, de dimension $N$, en des coordonnées dans un espace latent de dimension $M$, avec $M < N$. La dimension de l'espace latent dépend du nombre de caractéristiques et de leur complexité. De préférence, elle est inférieure à 10, voire inférieur à 5 de manière à pouvoir faciliter la classification. Le passage de l'espace des caractéristiques vers l'espace latent est effectué par une fonction de projection $f$ appliquée au vecteur de caractéristiques. La projection du vecteur $x_{j,t}$ dans le premier espace latent forme un premier vecteur latent $v_{j,t}$ de dimension $M$.

Plusieurs méthodes de réduction de dimensions sont connues de l'homme du métier. Par exemple, l'analyse en composante principales (ACP) est une méthode non supervisée et linéaire de réduction de dimensionnalité. Des méthodes non linéaires peuvent être mises en œuvre, par exemple la méthode UMAP (Uniform Manifold Approximation and Projection).

Cette étape de réduction de dimensions, bien que souvent avantageuse pour des données à grande dimensions ou corrélées, est cependant optionnelle.

Etape 170 : Classification temporelle.

Au cours de cette étape, chaque cellule est classifiée en fonction des caractéristiques projetées dans le premier espace latent, formant le premier vecteur latent $v_{j,t}$.

Des classes K1,$p$, ont préalablement été définies dans le premier espace latent L1. L'indice $p$ est un entier tel que $1 \leq p \leq P$, $P$ désignant le nombre de classes définies dans le premier espace latent. Les classes sont identiques pour l'ensemble des instants de mesure $t$. Ainsi, à chaque instant $t,$ une classe est assignée à chaque particule, en fonction du premier vecteur latent $v_{j,t}$ résultant d'une projection du vecteur de caractéristiques $x_{j,t}$ dans le premier espace latent L1.

Sur la figure 7A, on a représenté 4 classes K1,1, K1,2, K1,3 et K1,4, chaque classe étant matérialisée par une zone circulaire en pointillés. Les classes ont été définies de façon non supervisée, sur la base de cellules non annotées. Ce type de classification non supervisée est usuellement désignée par le terme anglosaxon clustering, chaque cluster représentant une classe établie de façon non supervisée.

La classification temporelle de chaque cellule est effectuée à chaque instant, d'où la désignation classification « temporelle ». On peut ainsi déterminer une trajectoire de chaque cellule entre les classes K1,$p$ au cours du temps, comme représenté sur la figure 7B. Sur la figure 7B, on a matérialisé une trajectoire d'une cellule entre un premier instant t=1 et un dernier instant t = T. La trajectoire désigne la succession de classes K1,$p$ successivement assignées à chaque cellule au cours du temps.

Etape 180 : Formation du vecteur de trajectoire

En considérant une durée totale d'acquisition de deux jours, et un pas d'échantillonnage temporel de 20 minutes, on obtient pour chaque cellule, une série de classes de la taille correspondant à la durée de vie de la cellule divisée par le pas d'échantillonnage temporel, sachant que le nombre de cellules peut dépasser plusieurs milliers. L'étape 170, mise en œuvre pour chaque cellule et à chaque instant, permet d'obtenir autant de trajectoires, dans le premier espace latent, que de cellules, et autant de points par trajectoire que d'instants de mesure auxquels la cellule est détecté sur l'image. Une classification des trajectoires dans le premier espace latent est complexe à mettre en œuvre, et ne permet pas une séparation suffisante entre les cellules.

Au cours de cette étape, la trajectoire ne correspond pas à une suite de coordonnées dans le premier espace latent, mais à une suite chronologique de classes temporelles définies suite à l'étape 170. Le fait de prendre en compte des classes, et non des coordonnées successives de chaque cellule dans le premier espace latent, permet de limiter l'influence du bruit résultant de l'acquisition de l'image ou des différentes opérations précédent la classification, en particulier la segmentation. En outre, l'assignation de classes à chaque cellule est une démarche cohérente avec l'évolution de chaque cellule au cours de son développement : chaque classe peut être considérée comme un état dans lequel se trouve la cellule, au cours de son développement. Le fait d'assigner chronologiquement différentes classes temporelles à une cellule correspond à une réalité biologique, traduisant l'évolution de l'état de la cellule au cours du temps.

Au cours de cette étape, on forme un vecteur de trajectoire $C_j$, dont chaque terme $C_j(t)$ est un entier entre 1 et p, correspondant à une classe temporelle assignée à la particule à chaque instant $t$. Le vecteur de trajectoire $C_j$ est constitue une signature de l'évolution de la particule 12j dans l'échantillon. Cette signature permet de tracer la façon dont la cellule se développe dans le milieu. La dimension du vecteur de trajectoire correspond au nombre d'incréments temporels T. D'autres types de vecteurs de trajectoire peuvent être considérés, par exemple basés sur une proportion de classes assignées à chaque cellule durant sa trajectoire, comme décrit par la suite.

Lorsque l'étape de réduction de dimensions (étape 170) n'est pas mise en œuvre, la classification est effectuée dans un espace dont chaque axe correspond à une caractéristique mesurée. Comme précédemment décrit, il s'agit d'une classification non supervisée, les classes étant définies avec des cellules non annotées.

Selon une possibilité, les classes sont définies de façon non supervisée en utilisant une partie des cellules de l'échantillon, formant une population d'apprentissage. L'autre partie de l'échantillon est alors constitué de cellules dites de test, qui peuvent faire l'objet d'un clustering dans les classes définies avec la population d'apprentissage.

Selon une autre possibilité, les classes ont été préalablement définies, au cours d'un précédent apprentissage, avec des cellules considérées comme identiques ou représentatives des cellules de l'échantillon analysé.

Etape 190 : Classification typologique

Afin d'effectuer une classification permettant une meilleure séparation des cellules ayant des signatures différentes, le vecteur de trajectoire de chaque cellule fait l'objet d'une réduction de dimension, dans un deuxième espace latent L2, comme représenté sur la figure 7C. Le deuxième espace latent L2 est différent du premier espace latent L1, mais les mêmes méthodes de réduction de dimension que dans l'étape 160 s'appliquent.

Sur la figure 7C, on a représenté un deuxième espace latent L2 de dimension 2, défini par les axes X2 et Y2. Des classes typologiques K2,$q$ sont définies dans le deuxième espace latent. L'indice $q$ est un entier tel que $1 \leq q \leq Q$, $Q$ désignant le nombre de classes définies dans le deuxième espace latent. On assigne une seule classe typologique à chaque trajectoire. Ainsi, la classification typologique correspond à une classification de trajectoires.

La projection du vecteur $C_j$ dans le deuxième espace latent L2 permet de former un deuxième vecteur projeté $w_j$, dit vecteur typologique, auquel est assigné une classe K2,q. Il s'agit d'un vecteur dit typologique, car dépend du type de cellule, et en particulier de l'évolution de la cellule au cours des instants de mesure.

Chaque classe typologique K2,q est représentative du typologie de la cellule dans l'échantillon. Tandis que la classification temporelle, dans le premier espace latent L1, permet de déterminer l'état d'une cellule à chaque instant, la classification typologique, dans le deuxième espace latent L2, permet une discrimination, entre les cellules, en fonction de leur développement. Il s'agit d'une classification intrinsèque à chaque cellule.

Selon une possibilité avantageuse, au cours de l'étape 180, le vecteur de trajectoire représente à un nombre d'instants auxquels la cellule est assignée à chaque classe temporelle. Dans ce cas, le vecteur de trajectoire $C_j$ a une dimension égale aux nombres de classes P, et chaque terme $C_j(p)$ correspond à une quantité, éventuellement normalisée, d'instants auxquels la cellule est classifiée dans la classe K1,p. Cela permet de réduire la dimension du vecteur de trajectoire, au détriment d'une perte d'information quant à la chronologie de la classification temporelle. La prise en compte d'un vecteur de trajectoire dont chaque terme représente une quantité d'instants auxquels la cellule a été classifiée dans chaque classe permet de s'affranchir du nombre d'incréments temporels dans lesquels la cellule est observée et classifiée. Cela permet d'obtenir, pour chaque cellule, un vecteur de trajectoire de même longueur, indépendamment de la durée de vie de la cellule. Cela permet également d'obtenir une information quant à la durée de vie cellulaire, qui correspond à la somme des instants assignés à chaque classe.

La figure 7D schématise une classification typologique de différentes cellules, chaque point correspondant à un vecteur typologique $w_j$ assigné à une cellule. Chaque classe typologique est représentative d'un développement particulier de la cellule. Une ou plusieurs classes typologiques peuvent être représentatives d'un développement anormal de cellules, ou d'un développement perturbé par la présence d'un principe actif dans le milieu de culture.

On a mis en œuvre les étapes précédemment décrites sur un nombre total de 6434cellules, avec 180 incréments temporels espacés de 20 minutes (confirmer). Les cellules ont été segmentées en un ensemble d'apprentissage (5148 cellules) et un ensemble de test (1286 cellules). L'ensemble d'apprentissage a permis de déterminer le premier espace latent, le deuxième espace latent ainsi que de définir les classes dans chacun d'entre eux.

Après une réduction de dimensions à un espace 2D en utilisant l'algorithme UMAP, des algorithmes classiques de classification non supervisés ont été mis en oeuvre tels que Kmeans, Birch (Balance iterative reducing and clustering using hierarchies) ou GMM (Gaussian Mixture Models), le nombre de classes P variant entre 2 et 6. Les performances de classification ont été quantifiées par un score de silhouette, dont l'utilisation est classique pour déterminer la performance d'un classifieur non supervisé, et pour choisir le nombre de classes.

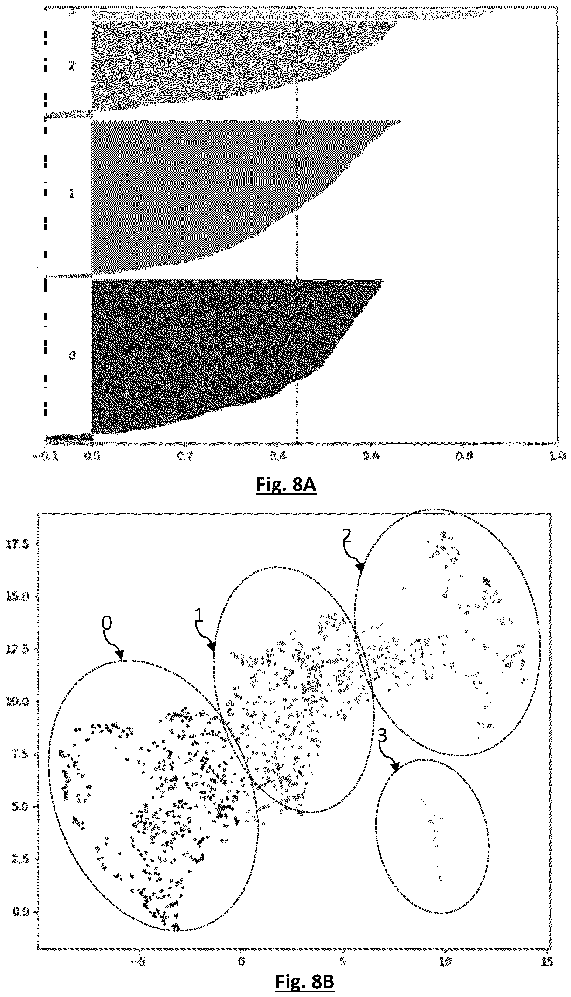

Les figures 8A et 8B illustrent la performance d'un classifieur à l'aide d'un score de silhouette. Sur la figure 8B, on a représenté une classification de cellules du jeu de test, en fonction de leurs caractéristiques telles que précédemment décrites, dans un premier espace latent bidimensionnel. La classification a été effectuée en mettant en œuvre l'algorithme de classification de Birch avec 4 classes

Le score de silhouette s est défini par :

$$s = \frac{b-a}{\max(a,b)} \quad (4)$$

où

$a$ = distance moyenne intra classe
$b$ = distance entre un point de la classe et une autre classe la plus proche.

Sur la figure 8A, on a tracé, pour 4 classes représentées, le score de silhouette de chaque point, sous la forme d'un histogramme. L'axe des ordonnées de la figure 8A correspond à chaque classe, identifiée par un entier (0, 1, 2 et 3) et l'axe des abscisses correspond au score de silhouette. Pour chaque classe, on obtient un histogramme, c'est-à-dire un nombre de points de la classe présentant le score.

La ligne en pointillés correspond à une moyenne du score de silhouette pour l'ensemble des points. Plus cette moyenne est proche de 1, meilleure est la performance de classification. D'autres scores de classification peuvent être considérés, par exemple le score de Davies-Bouldin ou le score de Calinski-Harabats.

Sur la figure 8B, on distingue 4 classes, qui correspondent à une typologie de cellules particulières :

- Classe 0 : cellules grandes (aire, périmètre), plus excentriques que la moyenne, et présentant une vitesse de déplacement plus importante que la moyenne des autres cellules.
- Classes 1 et 2 : cellules petites, se différenciant par la densité de cellules dans leur voisinage ;
- Classe 3 : cellules de durée de vie plus grande, et plus épaisses et dont la vitesse de déplacement est plus faible que la moyenne des autres cellules.

On observe que le fait de considérer des caractéristiques dynamiques (vitesse de déplacement) ou relatives à la durée de vie permet de discriminer les cellules en fonction de ces critères, et pas uniquement sur la prise en compte de critères morphologiques.

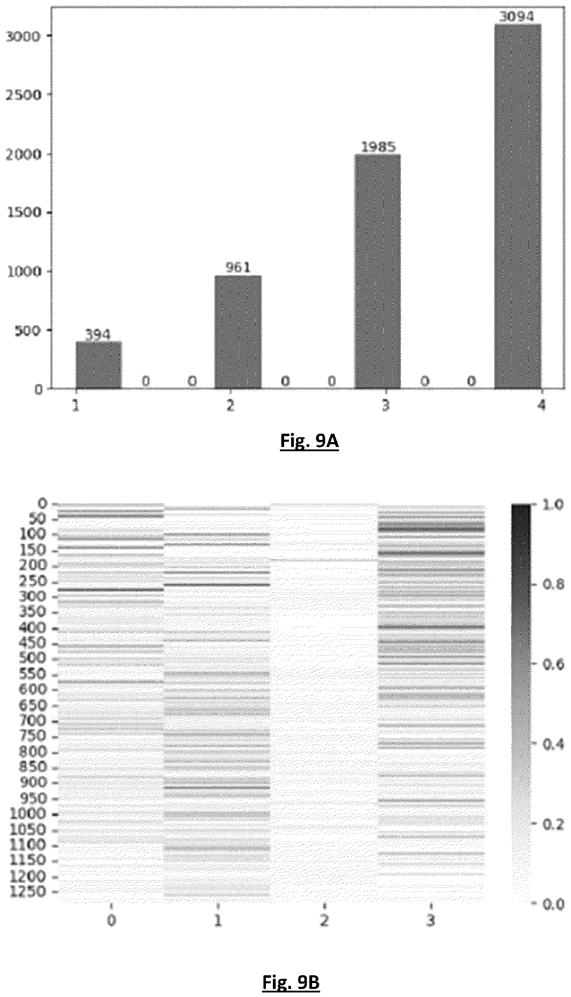

La figure 9A montre le nombre de classes différentes assignées à chaque trajectoire pour la première étape de classification temporelle, pour l'ensemble des 6434 cellules. On observe qu'une majorité de cellules est successivement assignée à différentes classes, et en particulier 3 ou 4 classes. Cela démontre la pertinence de la classification temporelle de cellules, en fonction des caractéristiques mesurées, éventuellement après réduction de dimension. Le nombre de cellules dont la trajectoire se limite à une seule classe est très minoritaire.

La figure 9B montre, pour 1250 cellules (axe des ordonnées), une proportion de classification dans chaque classe (axe des abscisses). La somme des proportions, sur une même ligne, est égale à 1.

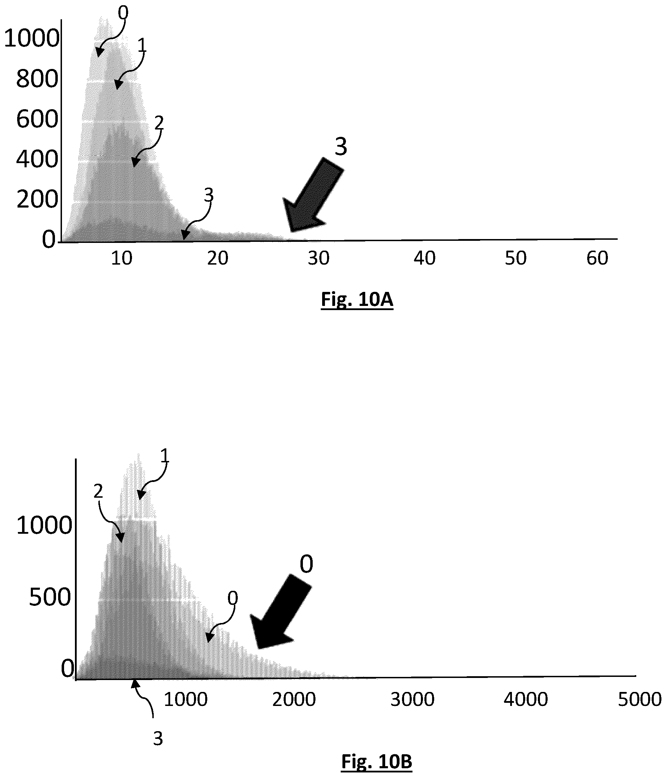

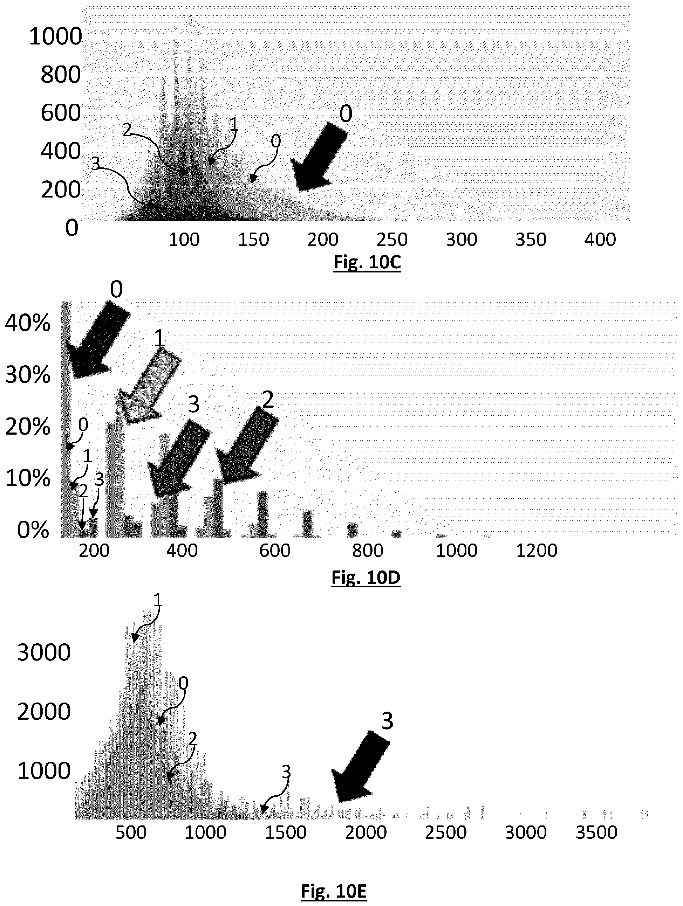

Les vecteurs de trajectoires tels que représentés sur la figure 9B, de dimension 2, comportent 4 classes. Les figures 10A à 10E montrent, pour chaque classe de la deuxième étape de classification, un histogramme des valeurs de chaque caractéristique. De haut en bas, les caractéristiques sont : épaisseur, aire, périmètre, densité, durée de vie. On observe que : La classe 0 du deuxième espace latent (K2,0) se distingue par la distribution de l'aire, du périmètre et de la densité au voisinage de la cellule : cellules plus grandes et moins denses.

La classe 3 du deuxième espace latent(K2,3) se distingue par l'épaisseur et la durée de vie.

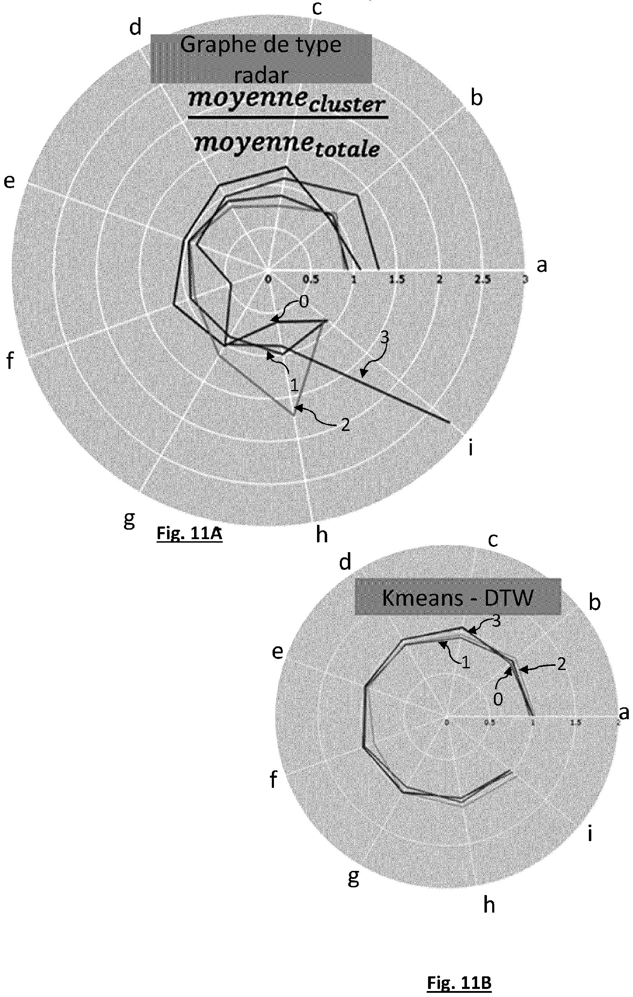

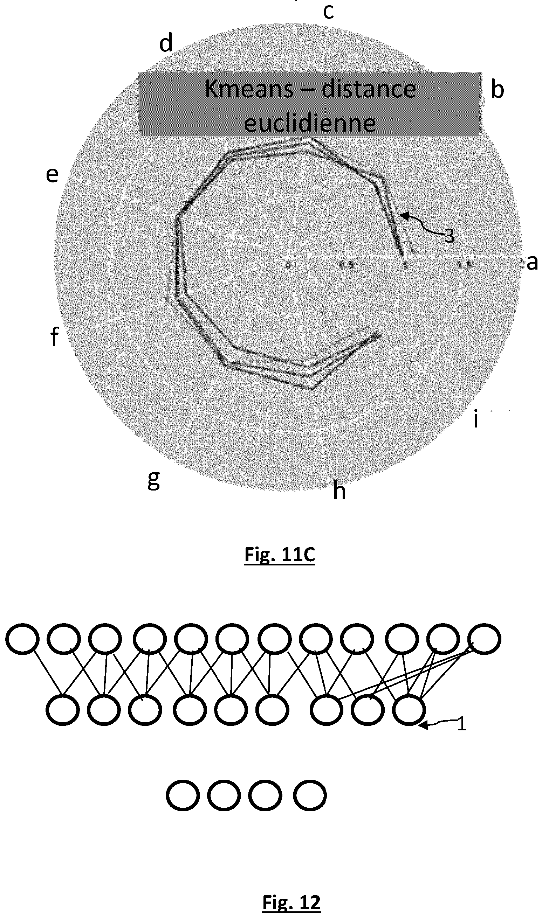

Les différentes typologies de cellules, correspondant respectivement à chaque classe du deuxième espace latent, sont représentées sur la figure 11A. Sur la figure 11A, on a représenté, pour différentes caractéristiques (a : masse sèche ; b : épaisseur ; c : aire ; d : périmètre ; e : excentricité ; f : vitesse moyenne sur chaque pas de temps ; g : variation de masse sèche à chaque pas de temps ; h : densité autour de la cellule ; i : longueur du cycle cellulaire), la moyenne dans chaque classe sur la moyenne de l'ensemble de la population (6434cellules). La figure 11A est à comparer avec les figures 11B, et 11C, qui représentent des classifications de trajectoires de cellules réalisées dans le premier espace latent, à partir de méthodes de classification non supervisée standard : kmeans (figure 11B) avec la distance de séries temporelles « dynamic time wraping », kmeans avec une distance euclidienne classique effectuée sur des trajectoires ayant une même longueur, l'adaptation de chaque longueur étant effectuée par interpolation linéaire (cf. figure 11B). Ces méthodes ne permettent pas d'effectuer un regroupement par classes avec des différences significatives de certaines caractéristiques entre les différentes classes.

La figure 12 illustre une variante de formation d'un vecteur de trajectoire, représentatif des classes successivement assignées à chaque cellule au cours de la classification temporelle. On a vu précédemment que ce vecteur peut être formé à partir d'une liste de chaque classe temporelle successivement assignée à une cellule, ou à partir d'une proportions d'assignations de chaque classe à une cellule. Selon cette variante, on met en œuvre un réseau de neurones, tel que schématisé sur la figure 12, comportant une couche d'entrée, plusieurs couches intermédiaires et une couche de sortie. Les données d'entrée de la couche d'entrée sont l'ensemble des caractéristiques successivement établies pour une cellule. La couche de sortie correspond à une chronologie de la classification de la cellule, obtenue en mettant en œuvre l'algorithme de classification retenu, par exemple BIRCH. Le réseau de neurones fait l'objet d'un apprentissage, en utilisant les classes assignées chronologiquement à chaque cellule. Il est possible de prendre en compte une couche intermédiaire, et de former le vecteur de trajectoire à partir de la valeur des nœuds de la couche intermédiaire. La valeur des nœuds de chaque couche intermédiaire correspond à une représentation de la classification temporelle effectuée pour la cellule. Il s'agit d'une représentation moins directe que celle basée sur une liste chronologique ou d'une proportion de classes.

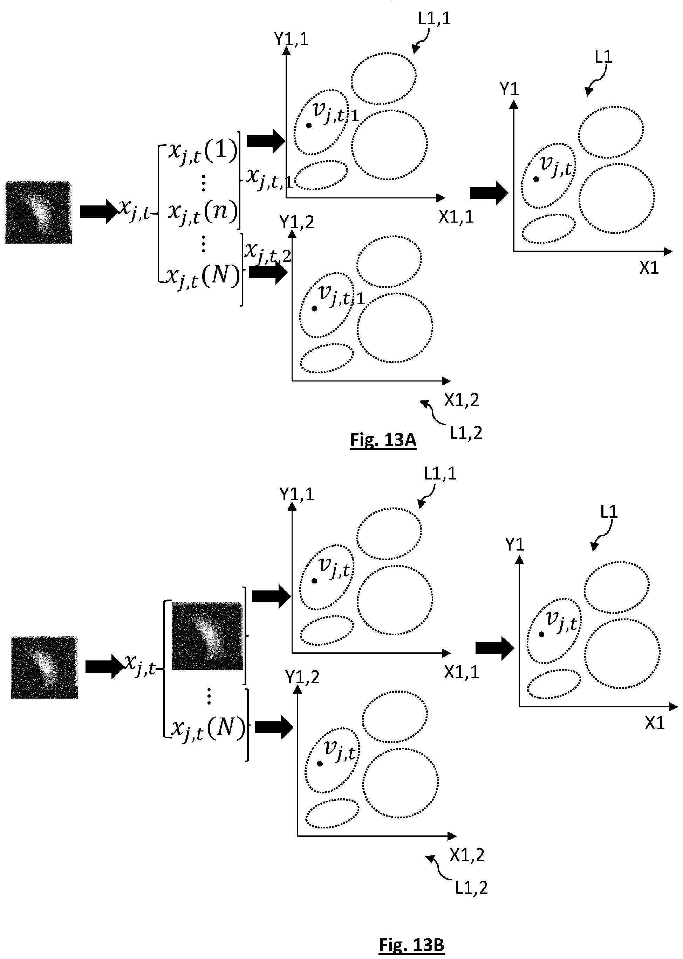

Les figures 13A à 13C illustrent des variantes des étapes précédemment décrites.

Sur la figure 13A, on a représenté une variante selon laquelle le vecteur de caractéristique $x_{j,t}$ est partitionné, en fonction des caractéristiques, de façon à former plusieurs vecteurs de caractéristiques élémentaires, le nombre de vecteurs élémentaires étant égal à K. Par exemple les caractéristiques morphologiques forment un premier vecteur élémentaire $x_{j,t,1}$, et les caractéristiques dynamiques forment un deuxième vecteur élémentaire $x_{j,t,2}$. Chaque vecteur élémentaire est projeté dans une espace latent élémentaire : le premier vecteur élémentaire $x_{j,t,1}$ est projeté dans un premier espace latent élémentaire L1,1, pour former un premier vecteur latent élémentaire $v_{j,t,1}$. Le premier espace latent élémentaire est défini par les axes X1,1 et Y1,1. Le deuxième vecteur élémentaire $v_{j,t,1}$ est projeté dans un deuxième espace latent élémentaire L1,2, pour former un deuxième vecteur latent élémentaire $v_{j,t,2}$. Le deuxième espace latent élémentaire est défini par les axes X1,2 et Y1,2. Les vecteurs latents élémentaires $v_{j,t,2}$ et $v_{j,t,2}$ sont ensuite projetés dans le premier espace latent L1.

La figure 13B illustre la possibilité d'utiliser des vignettes, telles que représentées sur la figure 5, chaque vignette correspondant à une cellule, dans le vecteur de caractéristiques : on prend en compte l'intensité assignée à chaque pixel dans la cellule. Comme décrit en lien avec la figure 13A, le masque de segmentation peut être projeté dans un premier espace latent élémentaire tandis que les autres caractéristiques sont projetées dans un autre, voire dans d'autres, espace(s) latent(s) élémentaire(s).

Comme précédemment indiqué, l'invention tire profit de la prise en compte de caractéristiques différentes des caractéristiques morphologiques de l'art antérieur. Il s'agit notamment des caractéristiques dynamiques (vitesse, variation de la masse sèche), ou liées à la durée de vie de la cellule (durée de vie, vitesse moyenne durant la vie de la cellule, variation de la masse sèche durant la vie de la cellule), ou liées au voisinage (densité cellulaire dans le voisinage de la cellule). Ces caractéristiques peuvent être prises en compte pour établir un vecteur de caractéristiques, ce dernier étant projeté dans le premier espace latent, éventuellement à travers des projections intermédiaires dans un espace latent élémentaire (cf. figures 13A et 13B). On obtient ainsi un vecteur de trajectoire $C_j$, représentatif des classifications temporelles successives de la particule dans le premier espace latent.

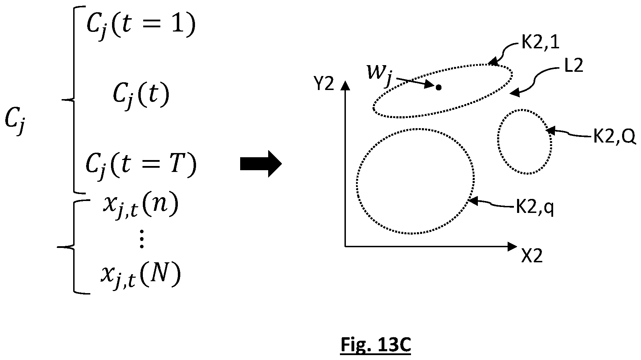

Selon la possibilité illustrée sur la figure 13C, certaines caractéristiques, en particulier les caractéristiques liées à la durée de vie de la cellule, sont ajoutées au vecteur de trajectoire, avant la projection dans le deuxième espace latent.

Une difficulté de la classification des trajectoires est liée à la variabilité de la vie des cellules dans l'échantillon. Lors de la première acquisition d'image, certaines cellules vivent déjà, et se divisent ou meurent durant la période d'acquisition des images. Lors de la dernière acquisition d'image, certaines cellules, nées durant la période d'acquisition des images, vivent toujours. Ainsi, les cellules détectées sur la première ou sur la dernière image sont des cellules dont la vie a commencé avant la première image, ou dont la vie se prolonge après la dernière image. Pour ces cellules, la trajectoire, définie par les classes temporelles successivement assignées, est dite incomplète, car elle ne prend pas en compte la totalité de la vie cellulaire.

On dispose également de cellules nées et mortes (ou se divisant) entre la première et la dernière image. Pour ces cellules, la trajectoire est complète, car elle prend en compte la totalité de la vie cellulaire.

Finalement, la quantité de cellules dont la vie commence et s'achève entre la première image et la dernière image peut être minoritaire. Il en résulte une diversité de la longueur de la trajectoire des différentes cellules, la longueur de la trajectoire dépendant du nombre d'images sur lesquelles la cellule apparaît..

La classification temporelle est effectuée sur l'ensemble des cellules pour l'ensemble des instants de mesure, à l'étape de filtrage près. Cependant, les cellules dont la trajectoire est incomplète sont de préférence classées d'une façon différente que les cellules dont la trajectoire est complète. Ces dernières sont aisément détectables, car il s'agit de cellules qui apparaissent et qui disparaissent au cours de la période d'acquisition, c'est-à-dire entre le premier et le dernier instant de mesure.

Selon une possibilité, seules les cellules sont la trajectoire est complète font l'objet, d'une classification typologique telle que précédemment décrite. Les trajectoires plus courtes correspondent à des cellules qui apparaissent ou disparaissent au cours de la période d'acquisition.

Les cellules dont la trajectoire est incomplète comportent une information exploitable, pouvant être utilisée. Pour cela, chaque cellule dont la trajectoire est incomplète est comparée :

- soit au début des trajectoires complètes, pour adresser les trajectoires incomplètes correspondant aux cellules étant nées au cours de la période d'acquisition ;
- soit à la fin des trajectoires complètes, pour adresser les trajectoires incomplètes correspondant aux cellules ayant commencé leur vie avant la période d'acquisition.

Pour chaque cellule dont la trajectoire est incomplète, la comparaison permet d'identifier une ou plusieurs trajectoires complètes « modèles », dont les premières ou dernières classes temporelles sont les plus proches des classes temporelles assignées à la trajectoire incomplète considérée. Ainsi, pour chaque cellule dont la trajectoire est incomplète, on détermine une ou plusieurs trajectoires complètes modèles. La proximité entre une trajectoire incomplète et une trajectoire complète peut être établie par un calcul d'une distance de Levenstein entre la séquence de classes temporelles respectivement assignée à chaque trajectoire.

Lorsqu'une seule trajectoire modèle est déterminée, la trajectoire incomplète est assignée à la classe typologique assignée à la trajectoire modèle.

Lorsque plusieurs trajectoires modèles sont déterminées pour une même trajectoire incomplète, et que ces trajectoires modèles sont dans une même classe typologique, la trajectoire incomplète est assignée à ladite classe typologique.

Lorsque plusieurs trajectoires modèles sont déterminées pour une même trajectoire incomplète d'une cellule, et que ces trajectoires modèles sont dans différentes classes typologiques, on effectue une identification de la trajectoire modèle la plus proche de la trajectoire incomplète, en effectuant une comparaison, à chaque instant de la trajectoire, entre :

- le vecteur de caractéristiques de la cellule associée à la trajectoire incomplète ;
- et le vecteur de caractéristiques de la cellule associée à chaque trajectoire modèle .

A chaque instant, la comparaison entre les deux vecteurs peut être effectuée en prenant en compte une distance euclidienne.

La comparaison permet de sélectionner la cellule, de trajectoire complète, dont les vecteurs de caractéristiques, au cours du temps, sont les plus proches des vecteurs de caractéristiques de la cellule dont la trajectoire est incomplète. La cellule dont la trajectoire est incomplète est assignée à la classe de la cellule, de trajectoire complète sélectionnée.

Bien que décrite en lien avec des cellules, l'invention peut s'appliquer à une classification de l'évolution de microorganismes, par exemple des bactéries ou des microalgues, ou à la classification de cellules mobiles, par exemple des spermatozoïdes.

## Revendications

1. Procédé de classification de particules biologiques ($12_j$), se déplaçant dans un échantillon (10), le procédé comportant :

   - a) acquisition d'images de l'échantillon respectivement en différents instants de mesure ($t$) ;
   - b) à partir des images acquises, suivi des positions respectives de différentes particules aux instants de mesure ;

   puis, en chaque instant de mesure, et pour chaque particule, :

   - c) à partir de chaque image acquise, détermination de caractéristiques de la particule, de façon à obtenir, à chaque instant de mesure, un vecteur de caractéristiques ($x_{j,t}$), de dimension N, N étant un entier supérieur ou égal à 2 ;
   - d) application d'un premier algorithme de classification, de façon assigner une classe temporelle (K1,$p$) à la particule, parmi un nombre de classes (P), à l'instant de mesure ;
   - e) à partir de chaque classe temporelle assignée à une même particule, en différents instants de mesure, application d'un deuxième algorithme de classification de façon à assigner une classe typologique (K2,$q$) à ladite particule, la classe typologique étant représentative de l'évolution de la particule durant les différents instants de mesure ;

   le procédé étant **caractérisé en ce que** l'étape e) comporte, pour chaque particule :

   - e-1) constitution d'un vecteur de trajectoire ($C_j$($t$)) à partir des classes temporelles assignées à ladite particule à chaque instant de mesure, le vecteur de trajectoire $C_j$ ayant une dimension égale au nombre de classes temporelles (P), chaque terme $C_j$($p$) du vecteur de trajectoire correspondant à une quantité, éventuellement normalisée, d'instants auxquels la particule est classifiée dans chaque classe (K1,p).
   - e-2) projection du vecteur de trajectoire dans un deuxième espace latent (L2), de façon à former un deuxième vecteur latent ($w_j$), représentatif de la particule;
   - e-3) application du deuxième algorithme de classification au deuxième vecteur latent de façon à assigner la classe typologique à la particule.

2. Procédé selon la revendication 1, dans lequel l'étape d) comporte :

   - d-1) projection du vecteur de caractéristiques dans un premier espace latent (L1), dont la dimension est inférieure à N, de façon à former un premier vecteur latent ($v_{j,t}$), représentatif des caractéristiques de la particule à l'instant de mesure ;
   - d-2) application du premier algorithme de classification au premier vecteur latent de façon assigner la classe temporelle à la particule, à l'instant de mesure .

3. Procédé selon l'une quelconque des revendications précédentes dans lequel l'étape e-1) comporte :

   - constitution d'un réseau de neurones de prédiction, configuré pour prédire chaque classe temporelle assignée à une particule à partir des caractéristiques déterminées à chaque instant de mesure, le réseau de neurones de prédiction comportant :

     • une couche d'entrée, formée par les caractéristiques déterminées pour une particule ;
     • une couche de sortie, formée par les classes temporelles successivement assignées à la particule à chaque instant de mesure ;
     • au moins une couche intermédiaire, entre la couche d'entrée et la couche de sortie ;

   - apprentissage du réseau de neurones à partir des caractéristiques déterminées pour différentes particules, ainsi qu'avec les classes temporelles successivement assignées à chacune desdites particules ;
   - formation du vecteur de trajectoire à partir d'une couche intermédiaire du réseau de neurones.

4. Procédé selon l'une quelconque des revendications précédentes, dans lequel lors de l'étape c), chaque caractéristique est choisie parmi :

   - au moins une caractéristique morphologique ;
   - et/ou au moins une caractéristique dynamique, correspondant à une variation d'une caractéristique morphologique en fonction du temps ou d'une vitesse de déplacement ;
- et/ou au moins une caractéristique de voisinage, représentant une densité de particules dans le voisinage de la particule ;
- et/ou tout ou partie d'un masque de segmentation, le masque de segmentation correspondant à une région d'intérêt extraite de l'image, comportant la particule.

5. Procédé selon l'une quelconque des revendications précédentes, dans lequel chaque étape c) comporte une détermination d'au moins deux caractéristiques de la particule.

6. Procédé selon l'une quelconque des revendications précédentes et de la revendication 2, dans lequel chaque étape d) comporte :

- d-i) partition du vecteur de caractéristiques ($x_{j,t}$) en K vecteurs élémentaires, K étant un entier inférieur à N ;
- d-ii) projection de chaque vecteur élémentaire dans un espace latent élémentaire (L1,1, L1,2), de façon à former, dans chaque espace latent élémentaire, un vecteur latent élémentaire ($x_{j,t,1}$, $x_{j,t,2}$);
- d-iii) projection de chaque vecteur latent élémentaire résultant de d-ii) dans le premier espace latent.

7. Procédé selon l'une quelconque des revendication précédentes, dans lequel lors de l'étape a), l'échantillon est disposé face à un capteur d'image (16), aucune optique de formation d'image n'étant disposé entre l'échantillon et le capteur d'image.

8. Procédé selon l'une quelconque des revendications 1 à 6, dans lequel

- lors de l'étape a), l'échantillon est disposé face à un capteur d'image (16), un système optique (17), de type lentille ou objectif, étant disposé entre l'échantillon et le capteur d'image, le système optique définissant un plan objet et un plan image ;
- le plan objet est décalé par rapport à l'échantillon et/ou le plan image est décalé par rapport au capteur d'image.

9. Procédé selon l'une quelconque des revendications 1 à 6, dans lequel lors de l'étape a), l'échantillon est disposé face à un capteur d'image, un système optique, de type lentille ou objectif, étant disposé entre l'échantillon et le capteur d'image, le système optique étant focalisé sur l'échantillon.

10. Procédé selon l'une quelconque des revendications précédentes, dans lequel la particule biologique est une cellule ou un microorganisme.

11. Procédé selon l'une quelconque des revendications précédentes, comportant, lors de l'étape e) :

- Parmi les particules :

• identification de particules détectées après l'image acquise au premier instant et non détectées au dernier instant de mesure, pour lesquelles la trajectoire, définie par les classes temporelles successivement assignées au cours des différents instants de mesure, est complète, une trajectoire complète s'étendant de l'apparition de la cellule sur une des images acquises jusqu'à la division ou la mort de ladite cellule ;
• identification de particules détectées sur l'image acquise au premier ou au dernier instant de mesure, pour lesquelles la trajectoire, définie par les classes temporelles successivement assignées au cours des différents instants de mesure, est incomplète ;

- Pour chaque particule dont la trajectoire est incomplète, identification d'au moins une particule modèle, de trajectoire complète, dont le début ou la fin de la trajectoire correspond à la trajectoire incomplète de ladite particule ;
- Classification typologique de chaque particule de trajectoire incomplète en fonction de la classification typologique d'au moins une particule modèle identifiée.

12. Dispositif d'observation d'un échantillon, comportant :

- un capteur d'image, configuré pour être disposé face à l'échantillon ;
- une unité de traitement, configurée pour recueillir des images formées par le capteur d'image en différents instants, et programmée pour mettre en œuvre les étapes c) à e) d'un procédé selon l'une quelconque des revendications précédentes.

13. Programme d'ordinateur, programmé pour mettre en œuvre les étapes c) à e) d'un procédé selon l'une quelconque des revendications 1 à 11 lorsque ledit programme est exécuté sur un ordinateur.

**Fig. 1A**

**Fig. 1B**

```
        ┌─────────┐
        │   100   │
        └─────────┘
             │
     I(t)    │
             ▼
        ┌─────────┐
        │   110   │
        └─────────┘
             │
             ▼
        ┌─────────┐
        │   120   │
        └─────────┘
             │
             ▼
        ┌─────────┐
        │   130   │
        └─────────┘
             │
             ▼
        ┌─────────┐
        │   140   │
        └─────────┘
             │
  x_{j,t}(n) │
             ▼
        ┌─────────┐
        │   150   │
        └─────────┘
             │
   x_{j,t}   │
             ▼
        ┌─────────┐
        │   160   │
        └─────────┘
             │
   v_{j,t}   │
             ▼
        ┌─────────┐
        │   170   │
        └─────────┘
             │
             ▼
        ┌─────────┐
        │   180   │
        └─────────┘
             │
    C_j      │
             ▼
        ┌─────────┐
        │   190   │
        └─────────┘
             │
    w_j      │
             ▼
```

**Fig. 2**

**Fig. 3A**

**Fig. 3B**

**Fig. 4**

**Fig. 5**

**Fig. 6A**

**Fig. 6B**

**Fig. 6C**

**Fig. 6D**

**Fig. 6E**

**Fig. 6F**

**Fig. 7A**

**Fig. 7B**

**Fig. 7C**

**Fig. 7D**

Fig. 8A

Fig. 8B

**Fig. 9A**

**Fig. 9B**

**Fig. 10A**

**Fig. 10B**

Fig. 10C

Fig. 10D

Fig. 10E

Fig. 11A

Fig. 11B

**Fig. 11C**

**Fig. 12**

**Fig. 13A**

**Fig. 13B**

$$C_j \begin{cases} \begin{bmatrix} C_j(t=1) \\ \\ C_j(t) \\ \\ C_j(t=T) \end{bmatrix} \\ \begin{cases} x_{j,t}(n) \\ \vdots \\ x_{j,t}(N) \end{cases} \end{cases}$$

$\Rightarrow$

**Fig. 13C**

| | Europäisches Patentamt European Patent Office Office européen des brevets | **RAPPORT DE RECHERCHE EUROPEENNE** | Numéro de la demande EP 25 16 9572 |
|---|---|---|---|

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FRECKMANN EVA C. ET AL: "Traject3d allows label-free identification of distinct co-occurring phenotypes within 3D culture by live imaging", NATURE COMMUNICATIONS , vol. 13, no. 1 9 septembre 2022 (2022-09-09), XP093226923, UK ISSN: 2041-1723, DOI: 10.1038/s41467-022-32958-x Extrait de l'Internet: URL:https://www.nature.com/articles/s41467-022-32958-x [extrait le 2024-11-21] * abrégé; figures 1,2,3 * * page 2, colonne de droite, alinéa 2 * * User defined classification of heterogeneous states; page 3 * * page 7, colonne de gauche, alinéa 3 * * 3D spheroid culture and live imaging; page 17, colonne de gauche * * Pre-Processing; page 18 * * Feature analysis; page 18 * ----- -/-- | 1-13 | INV. G06V20/69 DOMAINES TECHNIQUES RECHERCHES (IPC) G06V |

Le présent rapport a été établi pour toutes les revendications

| Lieu de la recherche | Date d'achèvement de la recherche | Examinateur |
|---|---|---|
| La Haye | 15 avril 2025 | Meier, Ueli |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C02)

page 1 de 2

**EP 4 632 697 A1**

Europäisches Patentamt
European Patent Office
Office européen des brevets

# RAPPORT DE RECHERCHE EUROPEENNE

Numéro de la demande

EP 25 16 9572

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | COPPERMAN JEREMY ET AL: "Morphodynamical cell state description via live-cell imaging trajectory embedding", COMMUNICATIONS BIOLOGY , vol. 6, no. 1 4 mai 2023 (2023-05-04), XP093191456, ISSN: 2399-3642, DOI: 10.1038/s42003-023-04837-8 Extrait de l'Internet: URL:https://www.nature.com/articles/s42003 -023-04837-8.pdf [extrait le 2024-11-21] * le document en entier * ----- | 1-13 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| La Haye | 15 avril 2025 | Meier, Ueli |

EPO FORM 1503 03.82 (P04C02)

page 2 de 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 10816454 B

**Littérature non-brevet citée dans la description**

- **FRECKMANN EVA ET**. Traject3d allows label-free identification of distinct co-occuring phenotypes with 3D culture by live imaging. *Nature communications*, 09 September 2022, vol. 13 (1)
- **ALLIER C. et al.** NN-based cell analysis : from image to quantitative representation. *Frontiers in Physics*, 25 January 2022
- **HERVÉ et al.** Alternation of inverse problem approach and deep learning for lens-free microscopy image reconstruction. *Scientific Reports*, vol. 10 (1), 20207
- **WANG et al.** Cellpose : a generalist algorithm for cellular segmentation. *Nature methods*, vol. 18 (1), 100-106